# EUROPÄISCHE PATENTANMELDUNG

(11) **EP 0 970 601 A1**
(43) Veröffentlichungstag der Anmeldung: **12.01.2000**
(21) Anmeldenummer: 99112804.2
(22) Anmeldetag: 02.07.1999
(51) Int. Cl.: A01G 23/00, B60P 3/41

(54) **Vorrichtung zum Rücken von Holz**

(30) Priorität: 07.07.1998 DE 29811847 U
(71) Anmelder: Dasser Spezialfahrzeuge GmbH, 87484 Nesselwang (DE)
(72) Erfinder: Dasser, Manfred, 87484 Nesselwang (DE)
(74) Vertreter: Hutzelmann, Gerhard

(57) **Zusammenfassung**

Vorrichtung(1) zum Rücken von Holz, insbesondere Lang- und Kurzholz, mit einem Rungenkorb und einem Rückeschild(2), wobei das Rückeschild(2) verstellbar an der Vorrichtung(1) angelenkt ist und wenigstens eine Runge(9) zum Abschluß des Rungenkorbes vorgesehen ist, welche mit dem Rückeschild(2) verbunden ist.

## Beschreibung

Die vorliegende Erfindung bezieht sich aufeine Vorrichtung zum Rücken von Holz, insbesondere Lang- und Kurzholz, mit einem Rungenkorb und einem Rückeschild.

Es ist eine Vielzahl verschiedener Vorrichtungen zum Rücken von Holz, insbesondere Trag- und Rückeschlepper bekannt, die jedoch alle den Nachteil aufweisen, entweder nur Langholz oder nur Kurzholz rücken zu können.

Der Erfindung liegt die Aufgabe zugrunde, eine Vorrichtung vorzuschlagen, welche einerseits zum Rücken von Kurzholz und zugleich zum Rücken von Langholz verwendbar ist.

Diese Aufgabe wird erfindungsgemäß dadurch gelöst, daß das Rückeschild verstellbar an der Vorrichtung angelenkt ist und wenigstens eine Runge zum Abschluß des Rungenkorbes vorgesehen ist, welche mit dem Rückeschild verbunden ist.

Dadurch wird einerseits ein vollständiger Rungenkorb gebildet und andererseits das Rücken von Langholz ermöglicht, das beim Rücken an der Vorderseite meist angehoben wird.

Es hat sich als vorteilhaft erwiesen, wenn das Rückeschild höhenverstellbar ausgebildet ist.

Durch die Höhenverstellung des Rückeschilds kann zu rückendes Langholz problemlos angehoben werden.

Vorteilhaft ist es ebenfalls, wenn das Rückeschild kippbar ausgebildet ist.

Damit kann das Rückeschild in eine horizontale Lage gebracht werden, wo es als zusätzliche Auflage für Kurzholz dienen kann.

Eine weitere vorteilhafte Ausgestaltung liegt darin, daß das Rückeschild mit einem Oberlenker und einem Unterlenker an der Vorrichtung angelenkt ist.

Hiermit wird das Rückeschild besonders stabil mit der Rückevorrichtung verbunden.

Es hat sich zudem als vorteilhaft herausgestellt, wenn die vorrichtungsseitige Lagerung des Oberlenkers längsverstellbar ausgebildet ist.

Hierdurch kann das Rückeschild besonders leicht in eine horizontale Lage gekippt werden, bzw. die Steigung des Rückeschildes beeinflusst werden.

Weiterhin ist es vorteilhaft, wenn die mit dem Rückeschild verbundene Runge drehbar gelagen ist.

Dadurch wird ein Scheuem des zu ladenden Holzes an der Runge durch Abrollen vermieden.

Vorteilhaft ist es auch, wenn die mit dem Rückeschild verbundene Runge kippbar gelagert ist.

Damit kann die Runge weggekippt werden, wenn zusätzlich zu Kurzholz noch leichtes Langholz gerückt werden soll.

Besonders vorteilhaft ist es, wenn eine Seilwinde vorzugsweise zum Aufnehmen von Langholz vorgesehen ist.

Hiermit ist es einerseits möglich, eine festgefahrene Rückevorrichtung herauszuziehen, als auch andererseits Langholz beizuziehen und den Anfang des Stammes auf das Rückeschild zu legen.

Dabei hat es sich als vorteilhaft erwiesen, wenn wenigstens eine Führungsrolle für das Seil der Seilwinde vorgesehen ist.

Hierdurch wird ein exaktes Aufwickeln des Seils aufdie Seilwinde erreicht.

Vorteilhaft ist es auch, wenn eine Führungsrolle am Rückeschild angeordnet ist.

Dadurch wird die Position am Rückeschild zu der das aufzunehmende Holz gezogen wird genau bestimmt.

Weiterhin hat es sich als vorteilhaft erwiesen, wenn eine Führungsrolle am Oberlenker des Rückeschildes angeordnet ist.

Damit wird eine besonders stabile Befestigung der Führungsrolle erreicht und zugleich vermieden, daß die Führungsrolle die sonstigen Funktionen des Rückeschildes nicht beeinträchtigt.

Ebenfalls hat es sich als besonders vorteilhaft erwiesen, wenn ein Ladekran zum Aufnehmen von Kurzholz und leichtem Langholz vorgesehen ist.

Hiermit kann Kurzholz besonders flexibel aufgenommen werden.

Die Erfindung wird anhand eines Ausführungsbeispiels verdeutlicht. Dabei zeigt:
- Fig. 1: einen Trag- und Rückeschlepper in der Betriebsstellung zum Rücken von Holz, insbesondere Langholz, und

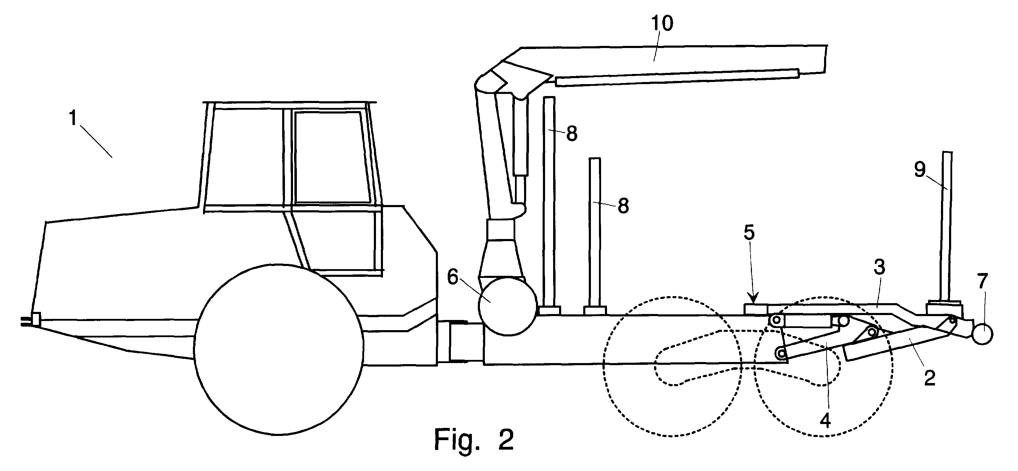

- Fig. 2: denselben Trag- und Rückeschlepper in der Betriebsstellung zum Tragen von Kurzholz in einem Rungenkorb und gleichzeitigem Rücken von leichtem Langholz.

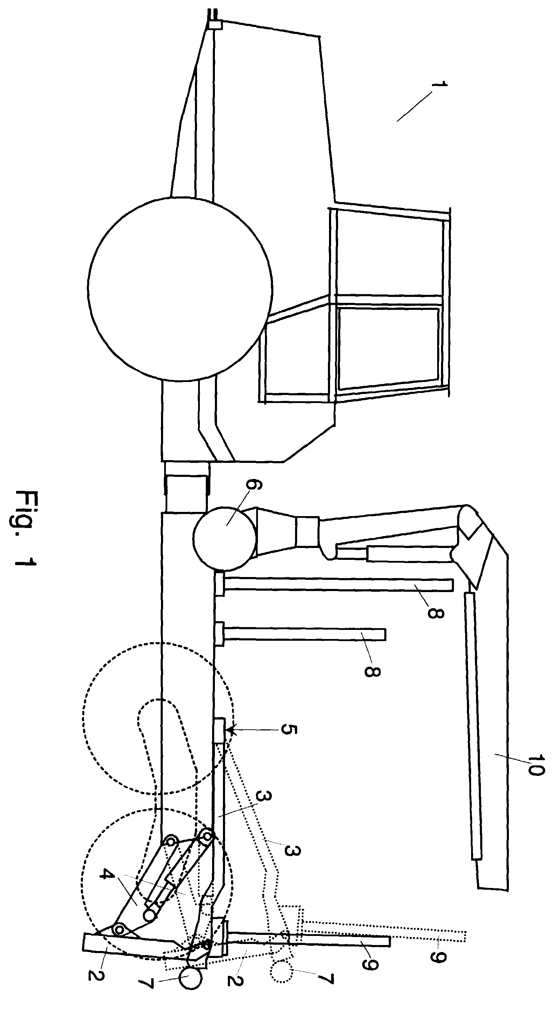

Mit 1 ist in Fig. 1 ein Trag- und Rückeschlepper mit einem höhenverstellbaren Rückeschild 2 bezeichnet. Das Rückeschild 2 ist über einen Oberlenker 3 und einen Unterlenker 4 mit dem Schlepper 1 verbunden. Ein Angriffspunkt 5 des Oberlenkers 3 am Schlepper 1 ist in Langsrichtung verschiebbar ausgebildet. Am Schlepper ist eine Seilwinde 6 angeordnet, deren Seil von einer Führungsrolle 7 am hinteren Ende des Oberlenkers 3 seitlich fixiert wird.
Das Rückeschild 2 ist über die beiden Lenker 3 und 4 höhenverstellbar. Mit der Seilwinde 6 wird nicht näher dargestelltes Langholz an das Rückeschild 2 herangezogen. Das herbeigezogene Ende des Langholzes wird mit dem Rückeschild 2 angehoben. Zudem kann noch durch Verstellen des Angriffpunktes 5 in Schlepperlängsrichtung die Steilheit des Rückeschildes 2 verändert werden.

An den Längsseiten des Schleppers 1 sind Rungen 8 angeordnet, die alle zusammen einen sogenannten Rungenkorb bilden. An den Längsseiten ist die jeweils hinterste Runge 9 am Oberlenker 3 des Rückeschildes 2 dreh- und kippbar gelagert. Weiterhin ist am Schlepper 1 ein Ladekran 10 vorgesehen. Zum Laden von nicht näher dargestelltem Kurzholz wird das Rückeschild 2 des Schleppers 1 durch Verschieben des Angriffspunktes 5 des Oberlenkers 3 in eine horizontale Lage gebracht. In dieser Betriebsart des Schleppers 1 dienen sowohl das Rückeschild 2 als auch der Oberlenker 3 als Auflage für das mit Hilfe des Ladekranes 10 in den Rungenkorb zu ladende Kurzholz. Zusätzlich kann noch leichtes Langholz mit der Seitwinde 6 beigezogen werden. Es kann somit gleichzeitig Kurzholz als auch leichtes Langholz gerückt werden.

## Patentansprüche

1. Vorrichtung(1) zum Rücken von Holz, insbesondere Lang- und Kurzholz, mit einem Rungenkorb und einem Rückeschild(2), **dadurch gekennzeichnet**, daß das Rückeschild(2) verstellbar an der Vorrichtung(1) angelenkt ist und wenigstens eine Runge(9) zum Abschluß des Rungenkorbes vorgesehen ist, welche mit dem Rückeschild(2) verbunden ist.

2. Vorrichtung nach Anspruch 1, **dadurch gekennzeichnet**, daß das Rückeschild(2) höhenverstellbar ausgebildet ist.

3. Vorrichtung nach Anspruch 1 oder 2, **dadurch gekennzeichnet**, daß das Rückeschild(2) kippbar ausgebildet ist.

4. Vorrichtung nach Anspruch 2 oder 3, **dadurch gekennzeichnet**, daß das Rückeschild(2) mit einem Oberlenker(3) und einem Unterlenker(4) an der Vorrichtung(1) angelenkt ist.

5. Vorrichtung nach Anspruch 4, **dadurch gekennzeichnet**, daß die vorrichtungsseitige Lagerung(5) des Oberlenkers(3) längsverstellbar ausgebildet ist.

6. Vorrichtung nach einem der vorangehenden Ansprüche, **dadurch gekennzeichnet**, daß die mit dem Rückeschild(2) verbundene Runge(9) drehbar gelagert ist.

7. Vorrichtung nach einem der vorangehenden Ansprüche, **dadurch gekennzeichnet**, daß die mit dem Rückeschild(2) verbundene Runge(9) kippbar gelagert ist.

8. Vorrichtung nach einem der vorangehenden Ansprüche, **dadurch gekennzeichnet**, daß eine Seilwinde(6) vorzugsweise zum Aufnehmen von Langholz vorgesehen ist.

9. Vorrichtung nach Anspruch 8, **dadurch gekennzeichnet**, daß wenigstens eine Führungsrolle(7) für das Seil der Seilwinde(6) vorgesehen ist.

10. Vorrichtung nach Anspruch 9, **dadurch gekennzeichnet**, daß eine Führungsrolle(7) am Rückeschild(2) angeordnet ist.

11. Vorrichtung nach Anspruch 9 oder 10, **dadurch gekennzeichnet**, daß eine Führungsrolle(7) am Oberlenker(3) des Rückeschildes(2) angeordnet ist.

12. Vorrichtung nach einem der vorangehenden Ansprüche, **dadurch gekennzeichnet**, daß ein Ladekran(10) zum Aufnehmen von Kurzholz und leichtem Langholz vorgesehen ist.
